# FASCICULE DE BREVET EUROPEEN

(11) **EP 2 838 662 B1**
(45) Date de publication et mention de la délivrance du brevet: **13.04.2016**
(21) Numéro de dépôt: 13720232.1
(22) Date de dépôt: 15.04.2013
(51) Int. Cl.: B04B 9/10, B04B 9/14, F16F 15/36

(54) **CENTRIFUGEUSE AVEC MECANISME D'ÉQUILIBRAGE ET PROCÉDÉ D'ÉQUILIBRAGE D'UNE TELLE CENTRIFUGEUSE**
ZENTRIFUGE MIT AUSWUCHTSVORRICHTUNG UND VERFAHREN ZUM AUSWUCHTEN EINER SOLCHEN ZENTRIFUGE
CENTRIFUGE WITH BALANCING MECHANISM AND BALANCING PROCEDURE FOR SUCH A CENTRIFUGE

(30) Priorité: 18.04.2012 FR 1253584
(43) Date de publication de la demande: 25.02.2015
(73) Titulaire: Maco Pharma, 59420 Mouvaux (FR)
(72) Inventeur: LE GUYADER, Philippe, F-35350 Poligné (FR); LETOURNEUR, Jean-Claude, F-44380 Pornichet (FR); BOUCARD, Franck, 85300 Challans (FR)
(74) Mandataire: Herrou, Nathalie
(86) Numéro de dépôt international: PCT/EP2013/001105
(87) Numéro de publication internationale: WO 2013/156135

(56) Documents cités:
- EP-A1- 1 247 585
- DE-A1-102008 054 089
- US-A- 2 442 397
- US-A- 5 160 876
- US-A- 6 125 098
- US-A1- 2010 069 216

## Description

L'invention concerne une centrifugeuse équipée d'un mécanisme d'équilibrage ainsi qu'un procédé d'équilibrage d'une telle centrifugeuse.

Le domaine de l'invention est celui de la conception et de la fabrication des équipements de centrifugation. Plus précisément, l'invention s'applique aux centrifugeuses utilisées dans les domaines biologiques pour centrifuger les produits contenus dans des récipients disposés dans des logements aménagés dans le rotor ou portés par celui-ci.

De façon classique, une centrifugeuse comprend :
- un arbre d'entraînement ;
- un rotor destiné à être monté de façon amovible sur l'arbre d'entraînement dans une position de montage pour laquelle l'arbre d'entraînement et le rotor sont accouplés en rotation ;
- un dispositif de blocage axial du rotor sur l'arbre d'entraînement, comprenant un élément mâle porté par le rotor, sollicité élastiquement et susceptible d'occuper une position de coopération avec un élément présenté par l'arbre d'entraînement.

Une telle centrifugeuse comprend également des moyens moteur destinés à entraîner en rotation l'arbre d'entraînement du rotor, ces moyens moteur étant reliés à des moyens d'alimentation électrique commandés par une commande de lancement d'un cycle de centrifugation actionnable par un opérateur.

Lors de la conception, de la fabrication et de l'utilisation de cette centrifugeuse, un des paramètres essentiels au bon fonctionnement d'une centrifugeuse devant être considéré avec le plus grand soin concerne l'équilibrage des pièces en rotation. En effet, les centrifugeuses sont des machines susceptibles de tourner à de très grandes vitesses (jusqu'à 150 000 tours/mn pour les ultracentrifugeuses) et il est indispensable de s'assurer du bon équilibrage de la machine pour éviter que cette dernière engendre, pendant son fonctionnement, des vibrations au-delà d'une certaine amplitude. En effet, ces vibrations nuisent énormément à la qualité de la centrifugation car elles remettent en suspension des produits qui étaient auparavant séparés. De plus, ces vibrations provoquent un vieillissement prématuré du système de rotation et des dispositifs de suspension. Ce vieillissement peut entraîner une rupture des pièces et un accident affectant l'opérateur.

L'équilibrage consiste à répartir uniformément le poids des pièces sur le rotor, autour de l'axe de rotation de celui-ci. Actuellement, l'équilibrage des pièces permettant d'éliminer le balourd s'effectue à la main. Les opérateurs, compte tenu de leur expérience, réussissent plus ou moins rapidement à ajuster la position des pièces et à assurer une centrifugation optimale et sans danger.

Une difficulté supplémentaire réside dans le fait que certaines vitesses de rotation font entrer en résonance le système de rotation et augmente les vibrations appliquées aux produits à centrifuger. Les expériences montrent que la vitesse de résonance intervient pour une vitesse de rotation nettement en dessous de la vitesse de consigne, de sorte que la résonance intervient à la fois lors de l'accélération et lors du freinage. De nos jours, les centrifugeuses sont principalement utilisées pour séparer les composants du sang. La séparation dure par exemple 30 minutes et s'effectue à une vitesse de 10 000 tours par minute. Si une résonance engendrant d'importantes vibrations intervient lors de la phase de freinage, les composants sanguins (plaquettes, globules blancs, globules rouges) se retrouvent alors de nouveau mélangés. Un défaut dans la séparation des composants est catastrophique car il n'est pas possible de renouveler ce type d'opération et de ce fait, les poches de sang doivent être jetées.

Le document US 2010/0069216 A1 décrit un procédé de contrôle pour centrifugeuse comprenant un arbre couplé à un rotor, et un balancier qui comprend un espace annulaire dans lequel un matériau de compensation sous forme de billes permet d'équilibrer les échantillons à centrifuger. Ces billes se déplacent librement dans l'espace annulaire. Le contrôle comprend l'accélération du rotor au-delà de la vitesse de résonance afin d'accomplir l'équilibrage, la mesure des vibrations, la détermination de la possibilité ou non de l'accélération puis la décélération en dessous de la vitesse de résonance. Cependant, ce balancier à billes présente l'inconvénient qu'à la fin d'un cycle de centrifugation, les billes ne reviennent pas nécessairement dans leur position initiale, provoquant alors un balourd supplémentaire.

Le document EP 1 247 585 correspond au préambule de la revendication 1 et décrit un système d'équilibrage pour machines à laver ou centrifugeuses à usage médical comprenant deux plateaux solidaires d'un arbre d'entraînement, entre lesquels deux anneaux entourant ledit arbre sont disposés. A l'arrêt, un ressort placé entre l'un des plateaux et un disque maintient bloqués les anneaux. En marche, lorsque la vitesse de centrifugation atteint une certaine valeur, des corps oscillants en contact avec le disque basculent, libérant ainsi les anneaux. Lorsque la centrifugeuse ralentit, les anneaux sont à nouveau bloqués dans leur dernière position. Cependant, la dernière position des anneaux ainsi obtenue correspond à la charge en cours dans la centrifugeuse. Lors d'un nouveau chargement, le blocage des anneaux dans une position particulière risque d'augmenter le déséquilibre de la centrifugeuse, de sorte que le système d'équilibrage ne parviendra pas à éliminer le balourd.

La présente invention permet de garantir un équilibrage des pièces en rotation lors d'un cycle de centrifugation afin d'obtenir un niveau de vibrations le plus faible possible et ceci tout au long du cycle, y compris lors de l'accélération et du freinage. La centrifugeuse de l'invention se compose d'un système mécanique opérant un rééquilibrage des masses en début de rotation. Selon un mode particulier de réalisation, le système mécanique est avantageusement associé à un système électronique contrôlant le niveau de vibrations et arrêtant éventuellement le fonctionnement de la centrifugeuse.

Sur le plan matériel, l'invention concerne une centrifugeuse comprenant un arbre vertical animé en rotation par un moteur, et un mécanisme d'équilibrage des pièces solidaires dudit arbre vertical, ledit mécanisme comprenant :
- un plateau solidaire de l'arbre vertical,
- au moins une masse compensatrice se déplaçant librement sur ledit plateau, ladite masse étant conçue pour limiter le déséquilibre des pièces solidaires de l'arbre vertical, et
- un mécanisme de blocage de ladite masse compensatrice, ledit mécanisme de blocage étant conçu pour immobiliser ladite masse compensatrice sur ledit plateau lorsque la vitesse de rotation dépasse une valeur déterminée.

La vitesse déterminée est notamment supérieure à la vitesse de résonance de la centrifugeuse. Au-delà de la vitesse de résonance, la masse compensatrice se positionne sur le plateau de façon à compenser un éventuel déséquilibre des pièces solidaires de l'arbre, par exemple dû à un mauvais chargement des produits à centrifuger sur ou dans le rotor. Dans cette position d'équilibre, la masse compensatrice est bloquée par le mécanisme de blocage. Lorsque la centrifugeuse est à l'arrêt, la masse compensatrice est à nouveau libre pour compenser un nouveau déséquilibre de chargement.

Selon un mode particulier de réalisation, le mécanisme d'équilibrage comprend une masse compensatrice inférieure et une masse compensatrice supérieure se déplaçant chacune librement et respectivement sur un plateau de base et sur un plateau de séparation solidaires de l'arbre vertical. Le plateau de séparation glisse verticalement autour de l'arbre. L'utilisation de deux masses compensatrices est avantageuse pour ne pas créer de déséquilibre quand il n'y a pas de déséquilibre initial.

Selon une réalisation particulière, chaque masse compensatrice est en forme d'anneau entourant l'arbre vertical. En deçà de la vitesse déterminée, chaque anneau est libre de se déplacer horizontalement sur son plateau respectif, afin d'équilibrer les pièces solidaires de l'arbre d'entraînement.

Selon une autre réalisation particulière, le mécanisme de blocage comprend un plateau de serrage placé au dessus de la masse compensatrice supérieure, ledit plateau de serrage pouvant glisser verticalement autour de l'arbre vertical. L'abaissement du plateau de serrage va bloquer la masse compensatrice supérieure sur le plateau de séparation qui, à son tour va s'abaisser pour bloquer la masse compensatrice inférieure sur le plateau de base.

Dans un mode particulier, le mécanisme de blocage comprend en outre deux masselottes solidarisées à un plateau de tenue par un axe permettant de les basculer dans la direction opposée à l'arbre vertical, ledit basculement des masselottes entraînant l'abaissement dudit plateau de serrage de sorte à immobiliser les masses compensatrices inférieur et supérieure sur leur plateau respectif. Les masselottes présentent notamment, en coupe, une forme en "L". Elles sont diamétralement opposées par rapport à l'axe de rotation de l'arbre vertical et leur partie inférieure est en contact avec le plateau de serrage. Ainsi, lors de la rotation de l'arbre, la force centrifuge va faire basculer le "L" en avant, en appuyant sur le plateau de serrage de sorte à l'abaisser.

De façon avantageuse, un ressort inférieur écarte le plateau de base et le plateau de séparation de sorte à permettre le déplacement libre de la masse compensatrice inférieure. Lorsque la centrifugeuse est à l'arrêt, le ressort inférieur tient écarté le plateau de base et le plateau de séparation pour laisser la masse compensatrice se déplacer librement. Lorsque le plateau de séparation s'abaisse jusqu'à bloquer la masse compensatrice inférieure, le ressort inférieur se comprime. Ensuite, lors de la phase de freinage, le ressort inférieur se détend.

De façon similaire, un ressort supérieur écarte le plateau de séparation et le plateau de serrage de sorte à permettre le déplacement libre de la masse compensatrice supérieure. Lorsque la centrifugeuse est à l'arrêt, le ressort supérieur tient écarté le plateau de serrage et le plateau de séparation pour laisser la masse compensatrice se déplacer librement. Lorsque le plateau de serrage s'abaisse jusqu'à bloquer la masse compensatrice supérieure sur le plateau de séparation, le ressort supérieur se comprime. Ensuite, lors de la phase de freinage, le ressort supérieur se détend.

En particulier, le taux de raideur du ressort inférieur est supérieur au taux de raideur du ressort supérieur. Ainsi, la masse compensatrice supérieure est bloquée avant la masse compensatrice inférieure. Ceci permet un meilleur équilibrage.

Selon un autre mode particulier, la centrifugeuse comprend en outre un rotor placé sur ledit arbre vertical dans une position de montage pour laquelle l'arbre d'entraînement et le rotor sont couplés en rotation.

Afin de contrôler le niveau de vibration dans la centrifugeuse lors d'un cycle test, la centrifugeuse comprend en outre un module de contrôle commandant la vitesse de rotation dudit arbre et recevant d'un capteur des signaux sur le niveau des vibrations mesurées au sein de la centrifugeuse, ledit module de contrôle exécutant les étapes successives suivantes :
- accélération de la rotation jusqu'à une vitesse déterminée N1 inférieure à la vitesse de consigne ;
- décélération de la rotation jusqu'à une vitesse déterminée N2 ;
- mesure du niveau maximum de vibration au cours des étapes d'accélération et de décélération ;
- démarrage du cycle de centrifugation complet si le niveau de vibrations n'a pas dépassé un certain seuil.

En particulier, une valeur d'accélération pour atteindre une vitesse de consigne maintenue lors du cycle de centrifugation est introduite sur un clavier. L'accélération utilisée lors de l'étape d'accélération et/ou de l'étape de décélération est égale à la valeur introduite. De cette manière, il est possible d'effectuer le test dans les mêmes conditions d'accélération du cycle de centrifugation. Selon une variante de réalisation, la pente de l'accélération utilisée lors de l'étape d'accélération et/ou de l'étape de décélération est prédéfinie pour chaque centrifugeuse. De cette manière, cette pente est optimale pour chaque centrifugeuse.

En variante, plusieurs étapes d'accélération et de décélération sont exécutées, le cycle de centrifugation est démarré si au cours d'une étape d'accélération et de décélération, le niveau de vibrations n'a pas dépassé un certain seuil. De cette manière, il est possible de tenter plusieurs essais où les pièces mécaniques peuvent bouger et mieux se positionner avant de renoncer à la centrifugation.

Le cycle de centrifugation est abandonné si le niveau de vibrations à l'issue d'un nombre déterminé d'étapes d'accélération et de décélération, a toujours dépassé un certain seuil. De cette manière, on peut définir un nombre maximum d'essais avant de renoncer à la centrifugation. Selon un autre mode de réalisation, une indication est affichée pour informer que le cycle de centrifugation est abandonné à cause d'un niveau de vibrations trop élevé. De cette manière, il est possible à l'opérateur d'être averti de la raison de l'abandon de la centrifugation.

Selon un autre mode de réalisation, la vitesse déterminée N1 et la vitesse déterminée N2 sont calculées au cours d'une étape d'étalonnage en fonction des vitesses de résonance détectées. De cette manière, ces paramètres sont adaptés à chaque machine.

Sur un plan fonctionnel, l'invention concerne un procédé d'équilibrage d'une centrifugeuse comprenant un arbre vertical animé en rotation par un moteur, ledit procédé comprenant une étape de blocage d'au moins une masse compensatrice se positionnant sur un plateau solidaire de l'arbre lorsque la vitesse de rotation dépasse une valeur déterminée, l'au moins une masse compensatrice étant conçue pour limiter le déséquilibre des pièces solidaires de l'arbre vertical. De cette manière, il est possible de limiter le déséquilibre.

Selon un mode de réalisation, deux masses compensatrices indépendantes se positionnent chacune sur deux plateaux horizontaux couplés à l'arbre vertical, le blocage s'effectue d'abord en immobilisant la première masse compensatrice à partir d'une première vitesse déterminée et en immobilisant la seconde masse compensatrice à partir d'une autre vitesse déterminée dont la valeur est supérieure à la valeur de la première vitesse déterminée. De cette manière, le positionnement des masses compensatrices permet un meilleur équilibrage des pièces en mouvement.

Selon un autre mode de réalisation, le blocage des masses compensatrices consiste à baisser des plateaux au-dessus de chacune d'elles tout en comprimant deux ressorts. Le ressort associé au plateau qui bloque la première masse compensatrice avant la seconde masse possède une constante de raideur inférieure au second ressort. De cette manière, il est possible d'assurer de façon simple un blocage successif des deux masses.

Selon un autre mode de réalisation, le procédé d'équilibrage comprend les étapes de :
- accélération de la rotation jusqu' à une première vitesse déterminée N1 inférieure à une vitesse de consigne ;
- décélération de la rotation jusqu' à une seconde vitesse déterminée N2;
- mesure du niveau maximum de vibration au cours des étapes d'accélération et de décélération;
- démarrage du cycle de centrifugation pour atteindre la vitesse de consigne si le niveau de vibrations n'a pas dépassé un certain seuil.

De cette manière, le cycle de centrifugation n'est effectivement lancé que si le niveau de vibration est resté acceptable au cours des étapes de test consistant à accélérer et à décélérer.

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 est une représentation schématique d'une centrifugeuse selon un exemple de réalisation de l'invention ;
- les figures 2A, 2B et 2C illustrent le mécanisme de blocage des masses compensatrices selon un exemple de réalisation à diverses vitesses de rotation ;
- la figure 3 montre un exemple d'un schéma synoptique d'une centrifugeuse dotée d'une centrale de contrôle électronique;
- la figure 4 présente un exemple d'ordinogramme présentant les étapes pour réaliser un cycle de centrifugation en garantissant un niveau de vibrations minimum ;
- la figure 5 présente un exemple de chronogramme des différentes phases composant un cycle de centrifugation en indiquant la vitesse de rotation et le niveau de vibrations minimum.

La présente invention permet de garantir pour chaque cycle de centrifugation un niveau de vibrations minimum tout au long du cycle en compensant automatiquement les erreurs de chargement et les défauts d'équilibrage des pièces en rotation, et notamment en contrôlant le niveau de vibrations pour ne pas dépasser un seuil admissible.

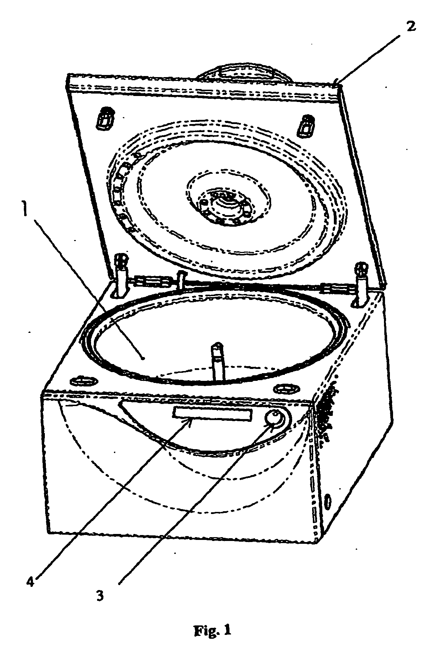

La figure 1 présente un schéma de principe d'une centrifugeuse selon un premier exemple de réalisation de l'invention. Une centrifugeuse selon l'invention comprend de façon classique en soi une cuve 1 intégrant :
- un bloc moteur relié à un arbre vertical;
- un rotor monté de façon amovible sur l'arbre d'entraînement, dans une position de montage pour laquelle l'arbre d'entraînement et le rotor sont accouplés en rotation ;
- un dispositif assurant un blocage axial du rotor sur l'arbre d'entraînement.

La cuve 1 est fermée par un couvercle 2 pivotant sur un coté du bâti. Un moyen d'introduction 3 d'une consigne est placé sur un coté de l'appareil, il peut être constitué d'un potentiomètre, d'une roue codeuse, de boutons poussoirs pour incrémenter et décrémenter une valeur, ou un écran tactile, etc. Un moyen d'affichage 4, typiquement un écran LCD ou LED, est placé à coté du moyen d'introduction 3 de la consigne et permet d'afficher la valeur de ladite consigne, ou d'autres valeurs de menu, comme la vitesse instantanée. En cas d'affichage de plusieurs valeurs, le moyen d'introduction 3 a également pour fonction de faire défiler les différents menus qui seront détaillés par la suite.

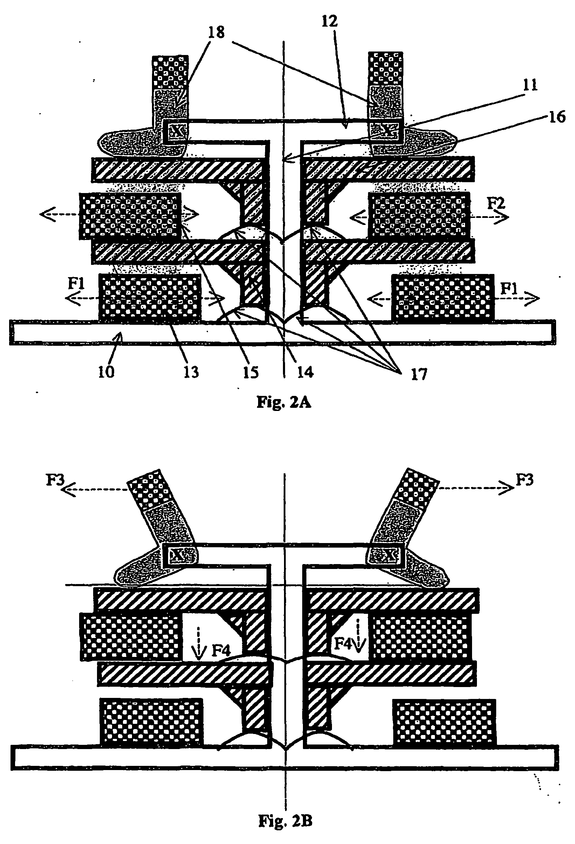

La figure 2A illustre la position des pièces composant le mécanisme de blocage de masses compensatrices lorsque le moteur est à l'arrêt, selon un exemple particulier de réalisation.

Un plateau de base 10 en acier inox ou en aluminium est fixé dans la partie supérieure d'un arbre vertical 11 couplé à un moteur (non représenté). L'extrémité supérieure de l'arbre vertical 11 supporte un plateau de tenue 12 des masselottes. Une masse compensatrice inférieure 13 en forme d'anneau entoure l'arbre vertical 11. Le diamètre intérieur de l'anneau est supérieur au diamètre extérieur de l'arbre 11, de cette manière la masse compensatrice 13 peut glisser horizontalement sur le plateau de base 10. Un plateau de glissement (non représenté) en acier inox poli ou dans un matériau favorisant le glissement recouvre éventuellement le plateau de base pour améliorer le déplacement de la masse compensatrice inférieure 13. Un plateau de séparation 14 des masses compensatrices glisse verticalement autour de l'arbre vertical 11 et recouvre la masse compensatrice inférieur 13. Une masse compensatrice supérieure 15 entourant l'arbre vertical 11 peut glisser horizontalement sur la face supérieure du plateau de séparation 14. Pareillement au plateau de base, le plateau de séparation 14 peut être recouvert d'un plateau de glissement (non représenté). Un plateau de serrage 16 est placé au-dessus de la masse compensatrice supérieur 15. Au moins un ressort 17 écarte la face supérieure du plateau de base 10 de la face inférieure du plateau de séparation 14. Au moins un autre ressort 17 écarte également la face supérieure du plateau de séparation 14 et la face inférieure du plateau de serrage 16. Selon un exemple de réalisation, les ressorts 17 sont des rondelles ondulées, plus communément appelées rondelles Borrelly. Dans cette position, les masses compensatrices 13 et 15 sont libres de se déplacer horizontalement dans les directions indiquées par les flèches F1 et F2. Au moins deux masselottes 18 dont la coupe est en forme de « L », sont disposées sur le dessus dans des positions diamétralement opposées par rapport à l'axe de rotation. Ces masselottes sont solidarisées au plateau de tenue 12 par un axe permettant de les basculer dans la direction opposée à l'arbre vertical 11.

Lorsque l'arbre vertical 11 n'est pas en rotation, les masses compensatrices 13 et 15 se déplacent librement sur leurs plateaux respectifs. La figure 2B présente le mécanisme de blocage des masses compensatrices lorsque la vitesse de rotation de l'arbre vertical 11 est faible. Les deux masselottes 18 comportent des masses en partie supérieure, représentées par un quadrillage sur la figure 2B. En rotation, la force centrifuge s'exerce principalement sur ces masses, forçant ainsi les masselottes 18 à basculer dans la direction opposée à l'arbre vertical 11 (flèche F3 de la figure 2B). Le basculement de la partie supérieur de la masselotte entraîne un abaissement (flèche F4 de la figure 2B) de l'extrémité de la partie inférieure en contact avec le plateau de serrage 16. L'abaissement du plateau de serrage 16 provoque la compression des ressorts 17. Avantageusement, les taux de raideur des ressorts placés sur le plateau de base 10 et sur le plateau de séparation 14 ne sont pas égaux. Selon un exemple de réalisation, les ressorts 17 placés sur le plateau de base 10 ont un taux supérieur à celui des ressorts placés sur le plateau de séparation 14. De cette façon, les ressorts placés sur le plateau de séparation 14 se déforment d'abord et la masse compensatrice supérieur de compensation 15 est bloqué avant la masse compensatrice inférieur 13. La figure 2B montre le blocage de la masse compensatrice supérieur uniquement, lorsque la vitesse de rotation est comprise dans un intervalle de valeurs déterminées.

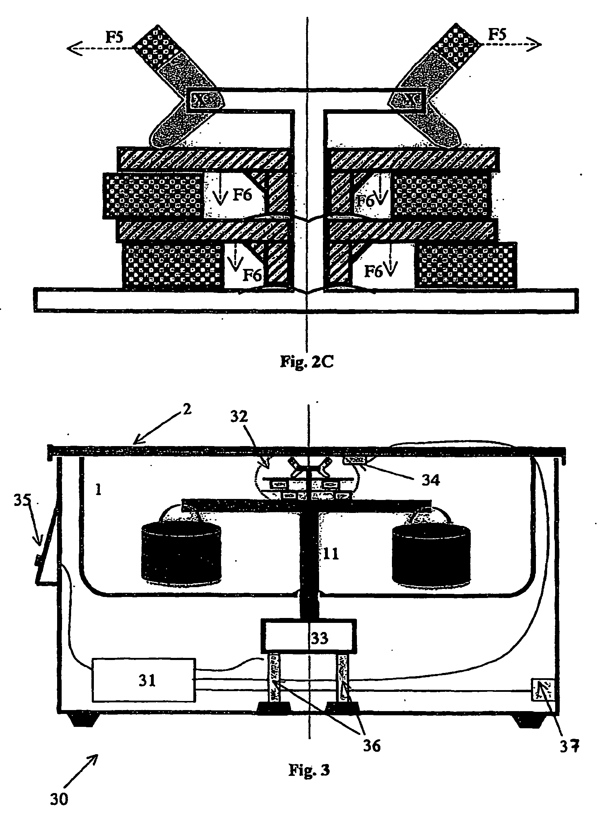

La figure 2C présente le mécanisme de blocage des masses compensatrices lorsque la vitesse de rotation de l'arbre vertical 11 devient plus importante. En rotation, la force centrifuge force les masselottes 18 à basculer dans la direction opposée à l'axe vertical 11 (flèche F5 de la figure 2B). Le basculement de la partie supérieure de la masselotte entraîne un abaissement (flèche F6 de la figure 2C) de l'extrémité de la partie inférieure en contact avec le plateau de serrage 16. La force exercée sur le plateau de serrage est suffisante pour comprimer les deux ressorts 17 bloquant ainsi la masse compensatrice inférieur 13. Le blocage des deux masses compensatrices intervient à partir d'une vitesse de rotation donnée déterminée en fonction de la géométrie et la répartition des masses des masselottes 18. Le blocage successif des deux masses compensatrices évite qu'elles se compensent mutuellement sans compenser le déséquilibre de l'ensemble des pièces en rotation.

La présente invention évite notamment que des vibrations trop fortes n'altèrent la qualité des produits issus de la centrifugation. Il convient donc d'analyser les vibrations au cours du cycle de centrifugation, et éventuellement de ne pas le lancer.

Pour analyser les vibrations dues à un défaut d'équilibrage, un détecteur est placé sur la coque de la centrifugeuse. Ce détecteur mesure l'amplitude des déplacements au moins sur le plan horizontal. Ces déplacements qui sont dus au déséquilibre des pièces en rotation génèrent un mouvement sinusoïdal autour d'une position de repos, dans les directions horizontales x et y, et dans une moindre mesure, la direction verticale z. Ces mouvements provoquent des vibrations préjudiciables à la qualité de la centrifugation et à la longévité de l'équipement. La valeur fournie par le détecteur est proportionnelle à l'amplitude des vibrations.

D'autres mécanismes de blocage intervenant à partir d'une certaine vitesse peuvent être envisagés dans le contexte de la présente invention. On peut par exemple envisager des aimants se plaquant sur les masses compensatrices et les immobilisant à partir d'une certaine vitesse.

La figure 3 montre un exemple d'un schéma synoptique d'une centrifugeuse 30 avec une centrale de contrôle électronique 31 reliée à un détecteur de vibrations 37. La cuve 1 est surmontée d'un couvercle 2 pour éviter toutes projections. L'arbre vertical 11 traverse le fond de la cuve 1, un joint assurant l'étanchéité. Des godets sont disposés symétriquement autour de l'arbre vertical 11 et reçoivent les produits à centrifuger.

L'arbre vertical 11 surmonté de son mécanisme d'équilibrage 32 illustré par les figures 2A, 2B et 2C, est mécaniquement couplé au moteur d'entraînement 33. Le module de contrôle 31 composé d'une carte électronique émet des commandes au moteur 33 sous la forme de signaux électrique de contrôle et de puissance. Le module 31 reçoit également des signaux d'une sonde tachymétrique 34 pour contrôler la vitesse de rotation de l'arbre vertical 11. Selon un exemple particulier de réalisation, la sonde tachymétrique 34 est un capteur magnétique placé dans le couvercle 2, cette sonde détecte le passage d'une pièce métallique animée en rotation par l'arbre vertical 11. Le module de contrôle 31 est également relié à un détecteur de vibrations 37 chargé de détecter les vibrations de l'appareil. Selon un exemple de réalisation, ce détecteur est un accéléromètre capable d'analyser les mouvements dans les trois dimensions x, y et z. Le détecteur 37 transmet des données de 16 bits et échantillonne à la fréquence de 2 KHz.

Le module de contrôle 31 est également relié à une interface utilisateur 35 comprenant des moyens d'introduction de commandes (bouton poussoir, potentiomètre, roue codeuse, écran tactile, ... ) et des moyens d'affichage (voyant, écran LCD, afficheur 7 segments, ... ). Le module de contrôle est enfin relié à un module d'alimentation électrique (non représenté).

Un système d'amortissement 36 immobilise le moteur au sein de la centrifugeuse 30. Ce système d'amortissement est constitué par exemple de Silentbloc (nom déposé d'une marque industrielle par la société belge Paulstra Vibrachoc), un Silentbloc est une pièce constituée d'un matériau souple permettant d'absorber des chocs et des vibrations entre des organes mécaniques et une structure qui les supporte. L'ensemble formé par les masses compensatrices et par le système d'amortissement permet de diminuer les vibrations de l'appareil. La présente invention solutionne le cas où le déséquilibre est supérieur à celui qui peut être compensé par l'ensemble réducteur de vibrations, deux cas peuvent se produire :
- Les vibrations résiduelles ne peuvent être compensées par la suspension de la centrifugeuse. Le cycle doit être arrêté au moment de la phase d'accélération pour que les vibrations affectent le moins longtemps possible l'appareil et les produits à centrifuger.
- Les vibrations résiduelles sont compensées par la suspension de la centrifugeuse avant que les masses compensatrices se positionnent. Le cycle se poursuit ensuite mais des vibrations de grande amplitude se font sentir en fin de décélération et provoque un mélange des produits.

La présente invention permet notamment de ne pas déclencher le lancement de la centrifugation en présence des deux cas décrits ci-dessus.

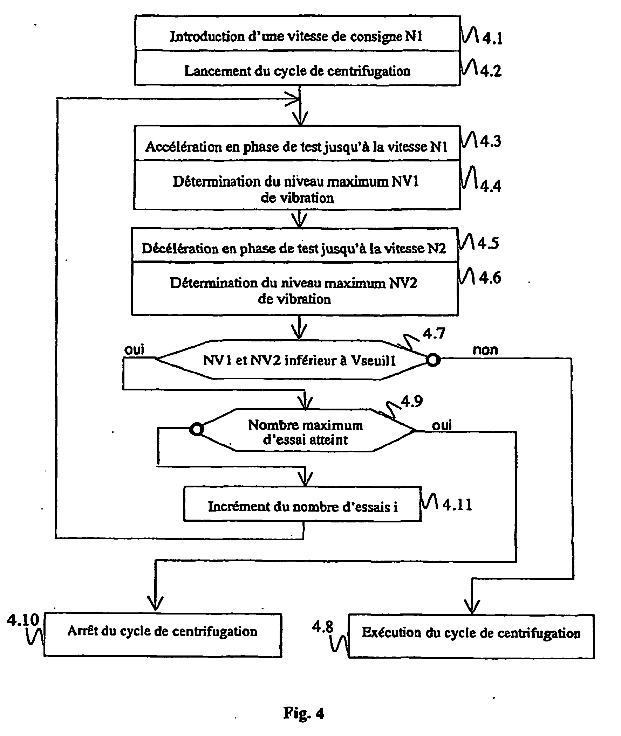

La figure 4 présente un ordinogramme des étapes permettant de réaliser un cycle de centrifugation en garantissant un niveau de vibrations minimum tout au long du cycle y compris lors de la décélération. Le déroulement des étapes ainsi décrit s'appuie sur un système mécanique opérant un rééquilibrage des masses en début de rotation, associé à un système électronique contrôlant le niveau de vibrations.

Tout d'abord, l'opérateur allume la centrifugeuse 30 et introduit une vitesse de consigne à l'aide de l'interface utilisateur 35 (étape 4.1). A l'étape 4.2, l'opérateur commande le cycle de centrifugation. Le module de contrôle 34 lance le moteur 33 dans une phase d'accélération jusqu'à une première vitesse de test N1 (étape 4.3). Cette vitesse N1 est choisie pour être supérieure à la vitesse de résonance de la machine. Le déséquilibre et la nature du chargement peut faire varier la vitesse de résonance dans une certaine mesure, de sorte que la valeur N1 est choisie pour être supérieure à celle-ci dans tous les cas. Selon un exemple particulier de réalisation, la centrifugeuse dispose d'un module d'étalonnage exécutable en usine par le module de contrôle 31. La centrifugeuse peut être étalonnée avant sa commercialisation. L'étape d'étalonnage consiste à effectuer plusieurs cycles d'accélération et de décélération à vide d'abord puis avec un chargement maximum (spécifié par les caractéristiques de la machine). Le module de contrôle détermine les vitesses au cours de laquelle un niveau maximum de vibrations est détecté, et calcule N1 pour être supérieure d'un certain pourcentage à la plus grande vitesse déterminée. De même une seconde vitesse de test N2 est calculée pour être inférieure d'un certain pourcentage à la plus petite vitesse déterminée et inférieure à la vitesse pour laquelle les masses compensatrices se bloquent. La vitesse N2 est éventuellement nulle. Les vitesses N1 et N2 sont calculées pour encadrer la vitesse de résonance quel que soit le déséquilibre et la nature du chargement.

La vitesse du moteur est contrôlée par un asservissement intégré au module de contrôle 31 comprenant la sonde tachymétrique 34. Au cours de cette phase d'accélération, le module de contrôle 31 reçoit les signaux du détecteur de vibration 37 et analyse les signaux pour déterminer la valeur maximale. A l'étape 4.4, le module de contrôle détermine le niveau maximum NV1 des vibrations, ce niveau s'exprime en mètre par seconde au carré. A l'étape 4.5, le module de contrôle déclenche une phase de décélération jusqu'à une vitesse N2. A l'étape 4.6, le module de contrôle détermine le niveau maximum NV2 des vibrations au cours de la décélération en phase de test.

A l'étape 4.7, le module de contrôle 34 compare les valeurs NV1 et NV2 avec une valeur de seuil Vseuil1 déterminée par l'expérimentation comme étant la valeur d'amplitude maximale des vibrations autorisée sur ce type de centrifugeuse. Si l'amplitude des vibrations est restée en dessous de la valeur de seuil, le cycle de centrifugation peut s'exécuter complètement (étape 4.8). Dans ce cas favorable, l'effet de la centrifugation sur les produits sera effectif et la centrifugeuse ne sera pas soumise à des vibrations excessives. Si à l'étape 4.7, il est vérifié que l'amplitude des vibrations est supérieure au seuil admissible, alors un nouvel essai est tenté. En effet, lors de ce nouvel essai, il est possible que les masses compensatrices se positionnent différemment et ainsi améliorent l'équilibre des pièces en rotation. A l'étape 4.9, le nombre d'essais est comparé à un nombre maximal d'essais, qui est par exemple de 3. Si ce nombre maximal d'essais est atteint, alors le module décide d'arrêter le cycle de centrifugation et une indication est affichée pour l'opérateur à l'aide de l'interface utilisateur 35 (étape 4.10). Sinon, le nombre d'essais actuels est incrémenté (étape 4.11) et le module relance une phase d'accélération (étape 4.3).

Si le cycle de centrifugation ne s'est pas déclenché à cause d'un déséquilibre important, l'opérateur peut effectuer un nouveau réglage de la centrifugeuse en déplaçant les produits soumis à centrifugation et lancer un nouvel essai.

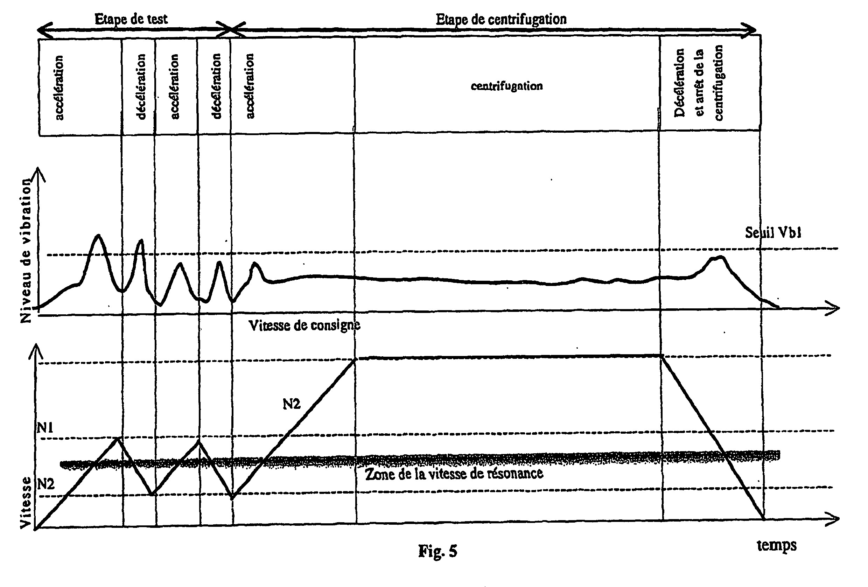

La figure 5 présente un chronogramme des différentes phases composant un cycle de centrifugation en indiquant la vitesse de rotation de l'axe vertical 11 et le niveau de vibrations mesuré par le détecteur de vibration 37.

Dans un premier temps, l'opérateur introduit les paramètres de la centrifugation sur l'interface utilisateur 35 et lance le cycle. Le module de contrôle 31 déclenche l'étape de test et accélère la vitesse jusqu'à la valeur N1. A proximité de la zone de la vitesse de résonance, l'amplitude des vibrations augmente puis redescend. Lorsque la vitesse N1 est atteinte, le module de contrôle déclenche la décélération. Lorsque la vitesse repasse dans la zone des vitesses de résonance, les vibrations augmentent de la même façon que précédemment. Supposons dans un premier temps, que l'amplitude des vibrations dépasse le seuil admissible, alors le module de contrôle décide de procéder à un nouvel essai. La vitesse de l'arbre vertical augmente de nouveau jusqu'à la valeur N1. Au cours de cette étape d'accélération les masses compensatrices se bloquent dans une autre position qui autorise un meilleur équilibrage de l'ensemble des pièces en rotation, puis la vitesse redescend jusqu'à la valeur N2. Lors de ce second essai, à aucun moment l'amplitude des vibrations ne dépasse Vseuil1. Le module de contrôle décide alors de lancer un cycle de centrifugation complet.

Dans l'exemple illustré par la figure 5, on peut constater que le niveau de vibrations n'a pas dépassé le seuil maximum admissible Seuil Vb 1 et donc, les produits ont eu l'effet obtenu par la centrifugation. A la fin du temps prévu de centrifugation, le module de contrôle déclenche le freinage et l'arrêt de la rotation de l'axe vertical 11.

Selon un mode de réalisation particulier, l'opérateur peut introduire une valeur d'accélération pour atteindre la vitesse de consigne. Selon un exemple simple, l'accélération est constante et s'exprime par une simple valeur numérique. D'autres cas sont envisageable comme une accélération progressive selon une fonction linéaire du temps, ou une fonction exponentielle. Selon un exemple de réalisation, la pente de l'accélération utilisée lors de l'étape de test peut être égale à la pente utilisée pour lancer le cycle de centrifugation. De même, si l'opérateur peut introduire une valeur de décélération, cette pente peut être utilisée pour paramétrer l'étape de décélération lors de l'étape du test avant de lancer la centrifugation.

Selon un mode de réalisation particulier, l'interface utilisateur 35 affiche le niveau de vibrations maximum mesurée lors d'une phase d'accélération et une indication que ce niveau est supérieur au niveau admissible. De cette façon, l'opérateur peut constater si le dépassement est minime et donc s'il peut régler différemment le dispositif pour compenser le déséquilibre ou si le dépassement est trop important pour être compenser. En ajustant différemment les pièces et en contrôlant sur l'interface 35 les effets sur l'amplitude des vibrations, l'opérateur peut acquérir plus rapidement de l'expérience dans le maniement des centrifugeuses. Avantageusement, l'interface utilisateur affiche aussi la vitesse pour laquelle l'amplitude maximale des vibrations est atteinte, typiquement c'est la vitesse de résonance. Ce paramètre permet aussi d'aider l'opérateur dans le positionnement des pièces et produits soumis à la centrifugation.

Selon un mode de réalisation particulier, l'interface utilisateur dispose d'un menu, de boutons ou d'un potentiomètre éventuellement caché ou du moins difficile d'accès, pour ajuster la valeur admissible du niveau des vibrations Seuil Vb1.

Selon un mode de réalisation particulier, l'interface utilisateur dispose de boutons ou d'un potentiomètre éventuellement caché ou du moins difficile d'accès pour introduire le nombre d'essais maximum lancés par le module de contrôle avant de renoncer à exécuter la phase de centrifugation.

## Revendications

1. Centrifugeuse comprenant un arbre vertical (11) animé en rotation par un moteur, et un mécanisme d'équilibrage (32) des pièces solidaires dudit arbre vertical (11), ledit mécanisme comprenant :
- un plateau (10, 14),
- au moins une masse compensatrice (13,15) se déplaçant librement sur ledit plateau (10,14), ladite masse étant conçue pour limiter le déséquilibre des pièces solidaires de l'arbre vertical (11), et
- un mécanisme de blocage de ladite masse compensatrice,
**caractérisée en ce que** le plateau est solidaire de l'arbre vertical, et **en ce que** le mécanisme de blocage est conçu pour immobiliser ladite masse compensatrice (13, 15) sur ledit plateau lorsque la vitesse de rotation dépasse une valeur déterminée.

2. Centrifugeuse selon la revendication 1, **caractérisée en ce que** le mécanisme d'équilibrage (32) comprend une masse compensatrice inférieure (13) et une masse compensatrice supérieure (15) se déplaçant chacune librement et respectivement sur un plateau de base (10) et sur un plateau de séparation (14), solidaires de l'arbre vertical (11).

3. Centrifugeuse selon la revendication 2, **caractérisée en ce que** chaque masse compensatrice (13,15) est en forme d'anneau entourant l'arbre vertical (11).

4. Centrifugeuse selon l'une des revendications 2 ou 3, **caractérisée en ce que** le mécanisme de blocage comprend un plateau de serrage (16) placé au dessus de la masse compensatrice supérieure (15), ledit plateau de serrage (16) pouvant glisser verticalement autour de l'arbre vertical (11).

5. Centrifugeuse selon la revendication 4, **caractérisée en ce que** le mécanisme de blocage comprend en outre deux masselottes (18) solidarisées à un plateau de tenue (12) par un axe permettant de les basculer dans la direction opposée à l'arbre vertical (11), ledit basculement des masselottes (18) entraînant l'abaissement dudit plateau de serrage (16) de sorte à immobiliser compensatrices inférieur (13) et supérieure (15) sur leur plateau respectif (10,14).

6. Centrifugeuse selon la revendication 5, caractérisée les masselottes (18) présentent, en coupe, une forme en "L".

7. Centrifugeuse selon la revendication 5 ou 6, **caractérisée en ce que** les masselottes (18) sont diamétralement opposées par rapport à l'axe de rotation de l'arbre vertical (11).

8. Centrifugeuse selon l'une des revendications 5 à 7, **caractérisée en ce que** la partie inférieure des masselottes (18) est en contact avec le plateau de serrage (16).

9. Centrifugeuse selon l'une quelconque des revendications 2 à 8, **caractérisée en ce que** un ressort inférieur (17) écarte le plateau de base (10) et le plateau de séparation (14) de sorte à permettre le déplacement libre de la masse compensatrice inférieure (13).

10. Centrifugeuse selon l'une quelconque des revendications 2 à 9, **caractérisée en ce que** un ressort supérieur (17) écarte le plateau de séparation (14) et le plateau de serrage (16) de sorte à permettre le déplacement libre de la masse compensatrice supérieure (15).

11. Centrifugeuse selon les revendications 8 et 9, **caractérisée en ce que** le taux de raideur du ressort inférieur (17) est supérieur au taux de raideur du ressort supérieur (17).

12. Centrifugeuse selon l'une quelconque des revendications 1 à 11, **caractérisée en ce qu'**elle comprend en outre un rotor placé sur ledit arbre vertical dans une position de montage pour laquelle l'arbre vertical (11) et le rotor sont couplés en rotation.

13. Centrifugeuse selon l'une quelconque des revendications 1 à 12, **caractérisée en ce qu'**elle comprend en outre un module de contrôle commandant la vitesse de rotation dudit arbre et recevant d'un capteur (37) des signaux sur le niveau des vibrations mesurées au sein de la centrifugeuse, ledit module de contrôle exécutant les étapes successives suivantes :
- accélération de la rotation jusqu'à une première vitesse déterminée (N1) inférieure à la vitesse de consigne ;
- décélération de la rotation jusqu'à une seconde vitesse déterminée (N2) ;
- mesure du niveau maximum de vibration au cours des étapes d'accélération et de décélération ;
- démarrage du cycle de centrifugation complet si le niveau de vibrations n'a pas dépassé un certain seuil.

14. Procédé d'équilibrage d'une centrifugeuse comprenant un arbre vertical (11) animé en rotation par un moteur, ledit procédé comprenant une étape de blocage d'au moins une masse compensatrice (13, 15) se positionnant sur un plateau solidaire (10,14) de l'arbre lorsque la vitesse de rotation dépasse une valeur déterminée, l'au moins une masse compensatrice (13,15) étant conçue pour limiter le déséquilibre des pièces solidaires de l'arbre vertical (11).

15. Procédé selon la revendication 14, **caractérisé en ce que** deux masses compensatrices (13,15) indépendantes se positionnent chacune sur deux plateaux horizontaux (10,14) couplés à l'arbre vertical (11), l'étape de blocage consistant à bloquer la première masse compensatrice (15) à partir d'une première vitesse déterminée et à bloquer la seconde masse compensatrice (13) à partir d'une autre vitesse déterminée dont la valeur est supérieure à la valeur de la première vitesse déterminée.

16. Procédé selon la revendication 15, **caractérisé en ce que** l'étape de blocage consiste à baisser des plateaux (14,16) au-dessus de chaque première et seconde masse compensatrice tout en comprimant deux ressorts, le ressort (17) associé à l'un des plateaux (16) bloquant la première masse compensatrice (15) ayant une constante de raideur inférieure au ressort (17) associé à l'autre plateau (14) bloquant la seconde masse compensatrice (13).

17. Procédé selon l'une des revendications 14 à 16, **caractérisé en ce qu'**il comprend les étapes de :
- accélération de la rotation jusqu'à une vitesse déterminée (N1) inférieure à une vitesse de consigne ;
- décélération de la rotation jusqu'à une vitesse déterminée (N2) ;
- mesure du niveau maximum de vibrations au cours des étapes d'accélération et de décélération ;
- démarrage du cycle de centrifugation pour atteindre la vitesse de consigne si le niveau de vibration n'a pas dépassé un certain seuil.

## Patentansprüche

1. Zentrifuge, umfassend eine vertikale Welle (11), die von einem Motor in Drehung versetzt wird, und einen Ausgleichsmechanismus (32) für die Teile, die mit der vertikalen Welle (11) fest verbunden sind, wobei der Mechanismus Folgendes umfasst:
- eine Platte (10, 14),
- mindestens eine Kompensationsmasse (13, 15), die sich frei auf der Platte (10, 14) bewegt, wobei die Masse dazu ausgestaltet ist, die Unwucht der Teile, die fest mit der vertikalen Welle (11) verbunden sind, zu begrenzen, und
- einen Blockierungsmechanismus der Kompensationsmasse,
**dadurch gekennzeichnet, dass** die Platte fest mit der vertikalen Welle verbunden ist und dass der Blockierungsmechanismus dazu ausgestaltet ist, die Kompensationsmasse (13, 15) auf der Platte festzusetzen, wenn die Rotationsgeschwindigkeit einen bestimmten Wert überschreitet.

2. Zentrifuge nach Anspruch 1, **dadurch gekennzeichnet, dass** der Ausgleichsmechanismus (32) eine untere Kompensationsmasse (13) und eine obere Kompensationsmasse (15) umfasst, die sich jeweils auf einer Grundplatte (10) und auf einer Trennplatte (14) frei bewegen, die mit der vertikalen Welle (11) fest verbunden sind.

3. Zentrifuge nach Anspruch 2, **dadurch gekennzeichnet, dass** jede Kompensationsmasse (13, 15) in Form eines Ringes vorliegt, der die vertikale Welle (11) umgibt.

4. Zentrifuge nach einem der Ansprüche 2 oder 3, **dadurch gekennzeichnet, dass** der Blockierungsmechanismus eine Klemmplatte (16) aufweist, die über der oberen Kompensationsmasse (15) platziert ist, wobei die Klemmplatte (16) vertikal um die vertikale Welle (11) gleiten kann.

5. Zentrifuge nach Anspruch 4, **dadurch gekennzeichnet, dass** der Blockierungsmechanismus darüber hinaus zwei Ausgleichsgewichte (18) umfasst, die fest mit einer Halteplatte (12) über eine Achse verbunden sind, die in die der vertikalen Welle (11) entgegengesetzte Richtung kippen kann, wobei das Kippen der Ausgleichsgewichte (18) das Absenken der Klemmplatte (16) zur Folge hat, so dass die untere (13) und obere Kompensationsmasse (15) auf ihrer jeweiligen Platte (10, 14) festgesetzt werden.

6. Zentrifuge nach Anspruch 5, **dadurch gekennzeichnet, dass** die Ausgleichsgewichte (18) im Querschnitt L-förmig sind.

7. Zentrifuge nach Anspruch 5 oder 6, **dadurch gekennzeichnet, dass** die Ausgleichsgewichte (18) im Verhältnis zur Rotationsachse der vertikalen Welle (11) diametral gegenüberliegen.

8. Zentrifuge nach einem der Ansprüche 5 bis 7, **dadurch gekennzeichnet, dass** der untere Teil der Ausgleichsgewichte (18) mit der Klemmplatte (16) in Kontakt steht.

9. Zentrifuge nach irgendeinem der Ansprüche 2 bis 8, **dadurch gekennzeichnet, dass** eine untere Feder (17) die Grundplatte (10) und die Trennplatte (14) dergestalt voneinander beabstandet, dass die freie Bewegung der unteren Kompensationsmasse (13) ermöglicht wird.

10. Zentrifuge nach irgendeinem der Ansprüche 2 bis 9, **dadurch gekennzeichnet, dass** eine obere Feder (17) die Trennplatte (14) und die Klemmplatte (16) dergestalt voneinander beabstandet, dass die freie Bewegung der oberen Kompensationsmasse (15) ermöglicht wird.

11. Zentrifuge nach den Ansprüchen 8 und 9, **dadurch gekennzeichnet, dass** der Steifheitsgrad der unteren Feder (17) höher als der Steifheitsgrad der oberen Feder (17) ist.

12. Zentrifuge nach irgendeinem der Ansprüche 1 bis 11, **dadurch gekennzeichnet, dass** sie darüber hinaus einen Rotor umfasst, der auf der vertikalen Welle in einer Montageposition platziert ist, in der die vertikale Welle (11) und der Rotor drehgekoppelt sind.

13. Zentrifuge nach irgendeinem der Ansprüche 1 bis 12, **dadurch gekennzeichnet, dass** sie darüber hinaus ein Steuermodul umfasst, mit dem die Drehgeschwindigkeit der Welle gesteuert wird, und das einen Sensor (37) der Signale über das Niveau der Vibrationen aufnimmt, die innerhalb der Zentrifuge gemessen werden, wobei das Steuermodul die folgenden aufeinander folgenden Schritte ausführt:
- Beschleunigen der Rotation bis zu einer ersten bestimmten Geschwindigkeit (N1) unterhalb der Sollgeschwindigkeit;
- Abbremsen der Rotation bis zu einer zweiten bestimmten Geschwindigkeit (N2);
- Messen des maximalen Vibrationsniveaus während der Beschleunigungs- und Bremsschritte;
- Starten des vollständigen Zentrifugierzyklus, wenn das Vibrationsniveau einen bestimmten Schwellenwert nicht überschritten hat.

14. Ausgleichsverfahren einer Zentrifuge, umfassend eine vertikale Welle (11), die durch einen Motor in Drehung versetzt wird, wobei das Verfahren einen Blockierungsschritt mindestens einer Kompensationsmasse (13, 15) umfasst, die auf einer Platte (10, 14) angeordnet ist, die mit der Welle fest verbunden ist, wenn die Drehgeschwindigkeit einen bestimmten Wert überschreitet, wobei die mindestens eine Kompensationsmasse (13, 15) dazu ausgestaltet ist, die Unwucht der Teile zu begrenzen, die fest mit der vertikalen Welle (11) verbunden sind.

15. Verfahren nach Anspruch 14, **dadurch gekennzeichnet, dass** zwei unabhängige Kompensationsmassen (13, 15) jeweils auf zwei horizontalen Platten (10, 14) angeordnet sind, die mit der vertikalen Welle (11) gekoppelt sind, wobei der Blockierungsschritt daraus besteht, die erste Kompensationsmasse (15) ab einer bestimmten ersten Geschwindigkeit zu blockieren und die zweite Kompensationsmasse (13) ab einer anderen bestimmten Geschwindigkeit zu blockieren, deren Wert höher als der Wert der ersten bestimmten Geschwindigkeit ist.

16. Verfahren nach Anspruch 15, **dadurch gekennzeichnet, dass** der Blockierungsschritt daraus besteht, die Platten (14, 16) über jede, die erste und die zweite Kompensationsmasse abzusenken, wobei zwei Federn zusammengedrückt werden, wobei die Feder (17), die einer der Platten (16) zugeordnet ist, die erste Kompensationsmasse (15) blockiert, und eine Steifheitskonstante unterhalb der Feder (17) aufweist, die der anderen Platte (14) zugeordnet ist, und mit der die zweite Kompensationsmasse (13) blockiert wird.

17. Verfahren nach einem der Ansprüche 14 bis 16, **dadurch gekennzeichnet, dass** es die folgenden Schritte umfasst:
- Beschleunigung der Rotation bis zu einer ersten bestimmten Geschwindigkeit (N1) niedriger als eine Sollgeschwindigkeit ist;
- Abbremsung der Rotation bis zu einer bestimmten Geschwindigkeit (N2);
- Messen des maximalen Vibrationsniveaus während der Beschleunigungs- und Bremsschritte;
- Starten des vollständigen Zentrifugierzyklus, um die Sollgeschwindigkeit zu erreichen, wenn das Vibrationsniveau einen bestimmten Schwellenwert nicht überschritten hat.

## Claims

1. A centrifuge comprising a vertical shaft (11) driven in rotation by a motor, and a mechanism (32) for balancing parts secured to said vertical shaft (11), said mechanism comprising:
- a plate (10, 14),
- at least one compensating mass (13, 15) which is freely displaceable on said plate (10, 14), said mass being designed to limit the imbalance of parts secured to the vertical shaft (11), and
- a mechanism for blocking said compensating mass,
**characterized in that** the plate is secured to the vertical shaft and **in that** the blocking mechanism is designed so as to immobilize said compensating mass (13, 15) on said plate when the rotational speed exceeds a predetermined value.

2. The centrifuge according to claim 1, **characterized in that** the balancing mechanism (32) comprises a lower compensating mass (13) and an upper compensating mass (15) which are respectively freely displaceable on a base plate (10) and on a separating plate (14) secured to the vertical shaft (11).

3. The centrifuge according to claim 2, **characterized in that** each compensating mass (13, 15) is in the form of a ring surrounding the vertical shaft (11).

4. The centrifuge according to claim 2 or 3, **characterized in that** the blocking mechanism comprises a clamping plate (16) placed above the upper compensating mass (15), said clamping plate (16) being capable of sliding vertically about the vertical shaft (11).

5. The centrifuge according to claim 4, **characterized in that** the blocking mechanism further comprises two flyweights (18) secured to a holding plate (12) via an axis allowing them to be pivoted in the direction opposite to the vertical shaft (11), said pivoting of the flyweights (18) causing said clamping plate (16) to be lowered in a manner such as to immobilize the lower (13) and upper (15) compensating masses on their respective plate (10, 14).

6. The centrifuge according to claim 5, **characterized in that** the flyweights (18) have an L-shaped section.

7. The centrifuge according to claim 5 or 6, **characterized in that** the flyweights (18) are diametrically opposed in relation to the axis of rotation of the vertical shaft (11).

8. The centrifuge according to any one of claims 5 to 7, **characterized in that** the lower portion of the flyweights (18) is in contact with the clamping plate (16).

9. The centrifuge according to any one of claims 2 to 8, **characterized in that** a lower spring (17) separates the base plate (10) and the separating plate (14) in a manner such as to allow free displacement of the lower compensating mass (13).

10. The centrifuge according to any one of claims 2 to 9, **characterized in that** an upper spring (17) separates the separating plate (14) and the clamping plate (16) in a manner such as to allow free displacement of the upper compensating mass (15).

11. The centrifuge according to claim 8 or 9, **characterized in that** the stiffness of the lower spring (17) is greater than the stiffness of the upper spring (17).

12. The centrifuge according to any one of claims 1 to 11, **characterized in that** it further comprises a rotor placed on said vertical shaft in a mounted position in which the vertical shaft (11) and the rotor are coupled in rotation.

13. The centrifuge according to any one of claims 1 to 12, **characterized in that** it further comprises a control module controlling the rotational speed of said shaft and receiving a sensor (37) for signals concerning the level of vibrations measured in the centrifuge, said control module executing the following steps in succession:
- accelerating the rotation to a first predetermined speed (N1) which is below the reference speed;
- decelerating the rotation to a second predetermined speed (N2);
- measuring the maximum level of vibrations during the acceleration and deceleration steps;
- commencing the complete centrifuging cycle if the level of vibrations has not exceeded a certain threshold.

14. A method for balancing a centrifuge comprising a vertical shaft (11) driven in rotation by a motor, said method comprising a step for blocking at least one compensating mass (13, 15) positioning itself on a plate (10, 14) secured to the shaft when the rotational speed exceeds a predetermined value, the at least one compensating mass (13, 15) being designed so as to limit the imbalance of the parts secured to the vertical shaft (11).

15. The method according to claim 14, **characterized in that** the two independent compensating masses (13, 15) are each positioned on two horizontal plates (10, 14) coupled to the vertical shaft (11), the blocking step consisting of blocking the first compensating mass (15) beyond a first predetermined speed and of blocking the second compensating mass (13) beyond another predetermined speed the value of which is higher than the value of the first predetermined speed.

16. The method according to claim 15, **characterized in that** the blocking step consists of lowering the plates (14, 16) above each first and second compensating mass while compressing two springs, the spring (17) associated with one of the plates (16) blocking the first compensating mass (15) having a stiffness constant which is lower than the spring (17) associated with the other plate (14) blocking the second compensating mass (13).

17. The method according to any one of claims 14 to 16, **characterized in that** it comprises the steps of:
- accelerating the rotation to a first predetermined speed (N1) which is below the reference speed;
- decelerating the rotation to a second predetermined speed (N2);
- measuring the maximum level of vibrations during the acceleration and deceleration steps;
- commencing the centrifuging cycle to reach the reference speed if the level of vibrations has not exceeded a certain threshold.
